# EUROPEAN PATENT SPECIFICATION

(11) **EP 2 910 775 B1**
(45) Date of publication and mention of the grant of the patent: **21.02.2018**
(21) Application number: 14200497.7
(22) Date of filing: 29.12.2014
(51) Int. Cl.: F03D 5/04

(54) **A wind power electricity generation system and method thereof**
Windkraftenergieerzeugungssystem und Verfahren dafür
Système de génération d'électricité à partir d'une éolienne et procédé associé

(30) Priority: 24.02.2014 CN 201410060821; 26.05.2014 CN 201410222027
(43) Date of publication of application: 26.08.2015
(73) Proprietor: Yan, Qiang, Shanghai 200333 (CN)
(72) Inventor: Yan, Qiang, Shanghai 200333 (CN)
(74) Representative: Lang, Christian

(56) References cited:
- JP-A- 2010 523 865
- US-A1- 2012 274 076

## Description

### Field of the Invention

The present invention relates to wind power, and particularly to a large wind power electricity generating system and method for generating the electricity power that is suitable for industrial application.

### Background of the Invention

Human being has invented various devices to use wind energy to generate electricity, and such devices can be divided into two categories based on the deployment of the rotating shaft: horizontal axis wind turbines which have horizontally deployed main shaft, and vertical axis wind turbines (VAWTs) which have vertically deployed main shaft.

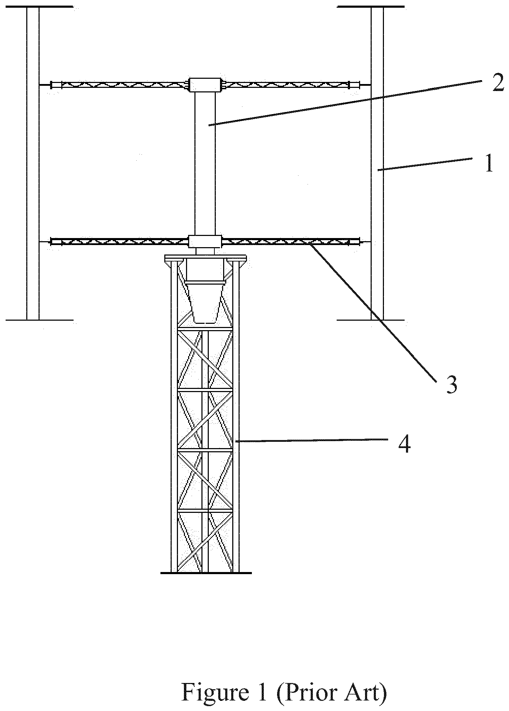

Current VAWTs utilize blades of certain airfoil profile. As shown in Figure 1, the blades 1 are usually connected to the vertical main shaft 2 via the radial arms 3, and the wind rotor is fixed on the top of a tower 4, and is able to rotate around the its center (*i.e*., the main shaft). As the wind rotor diameter increases, the length of the main shaft becomes longer, and the diameter of the main shaft becomes bigger, thus making manufacturing thereof difficult and costly. What's more, wind rotors with increased diameter also increases requirements on the height and strength of the tower. Although the Chinese patent CN200810108995.8 discloses a VAWT with a hollow main shaft, or a truss structure main shaft, when the wind rotor diameter increases to a certain degree, the main shaft diameter will become too big and difficult to be manufactured, which hinders the upsizing of VAWTs - VAWTs of 300kW and 500kW may be the limit, letting alone much bigger VAWTs.

Further, for the current VAWTs with fixed blade setting angle (rotation angle), when the wind rotor rotates, the magnitude and direction of the torque on the blade are changing all the time based on the blade's position on the wind rotor rotation orbit. At certain positions, the torque is bigger and at other positions smaller; at certain positions, the torque is positive and at other positions negative. For large VAWTs, the diameter of wind rotor is increased, and the rotation speed of the wind rotor is lowered, the torque changes on the blade become more significant. Therefore, the wind rotor of the VAWT usually has lower aerodynamic efficiency as the ultimate torque output of the wind rotor is the resultant torque on all the blades. To improve the efficiency, the blade rotation angle must be adjusted in real time based on the blade's position on the wind rotor rotation orbit.

Blade rotation angle adjustment is usually done by providing a pivot at the center of the blade ends, thus the blade is able to rotate and therefore adjust the blade rotation angle. However, the driving torque needed is closely related to the blade size, position of the pivot, wind direction and speed, and blade angle, *etc.* Therefore, in actual application, the blade angle shall be fixed to ensure stable output of the VAWT based on the specific conditions (e.g., under certain wind speed and direction).

Chinese Patent CN200610028267.7 discloses that a desirable wind rotor radius shall be 1.8 times to 4 times of the blade width (chord length). Based on the disclosure, for a wind rotor of 12 meter diameter, a suitable blade width is approximately 2 meters; for a wind rotor of 30 meter diameter, a suitable blade width is approximately 5 meters; for a wind rotor of 40 meter diameter, a suitable blade width is approximately 7 meters; and for a wind rotor of 50 meter diameter, a suitable blade width exceeds 8 meters. For a VAWT with a 50 meter diameter and a 50 meter length wind rotor, its output at 13m/s is around 1MW. However, such a wide structure (50 meter high and 50 meter wide) is difficult to be manufactured and transported, thus, hinders the commercialization of the turbine.

Further, current wind turbines are usually designed and manufactured to meet the planned capacity. The installation site and rated output are so limiting that the installation site and wind energy can not be used fully and efficiently. For example, wind turbines are typically manufactured with a rated capacity of 10KW, 30KW, 50KW, or 100KW independently. Manufacturing and assembly of parts for wind turbines of various capacities are different, so are the manufacturing requirements and techniques to be used. Therefore, they are hardly suitable for mass production.
From document US 2012 / 0274976 A1 a wind power electricity generating system is known, comprising a circuit frame with a rail and a plurality of trolleys designed to be moved on the rail of the circuit frame, wherein each trolley features at least one vertical axis wind turbine blade, such that the plurality of trolleys can be driven to move along the circuit frame by wind energy, and wherein the kinetic energy of the trolleys can be converted into electric energy by a provided generator system. In order to assure maximum efficiency of the wind turbine blades each blade of every trolley can further be rotated about its longitudinal axis to achieve an optimal blade orientation relative to the wind direction for every possible position of each trolley on the circuit frame.

### Summary of the Invention

The present invention overcomes the disadvantage of the prior wind system and provides a modular designed wind power system, which is ready for industrial mass production.

The present invention provides a wind power system comprising a circuit frame, towers that support the circuit frame, a plurality of rails attached to the circuit frame, a plurality of trolleys which are connected with each other, each trolley corresponds to and is connected with each blade whose blade rotation angle is adjustable, a plurality of generators, an anemometer and a wind vane, a plurality of positioning devices capable of sending and receiving signals are installed on the circuit frame and each trolley respectively, and devices for sending and receiving signals for adjusting a rotation angle of the blades deployed at each trolley, a current collector, which is able to collect power supply, installed at any of the trolleys.

In the present invention, the circuit frame may be of a unit module structure, and two unit modules may be connected via plugging. A plurality of modules may form the circuit frame with the designed shape.

In the present invention, the circuit frame may be designed to have arc sections and straight sections, and the positioning devices may be deployed on the arc sections of the circuit frame.

In the present invention, the trolley is attached to the rails of the circuit frame and capable of moving on the rails of the circuit frame via rollers/sliders.

In the present invention, the rail is connected to the circuit frame through the arms, and the rail can be of any kind, e.g., maglev.

In the present invention, a plurality of rollers is disposed on the trolley.

In the present invention, the trolleys are interconnected with a chain, and the generator may be fixed on the circuit frame. The generator has a gear fixed on its rotor shaft, while the chain engages the gear to drive the generator. The trolleys are optionally connected with each other by a steel cable or another chain, which is in parallel to the chain that engages the gear for driving the rotor shaft of the generators.

In the present invention, the current collector may be a pantograph or a slip ring that is deployed on any of the trolleys, thereby receiving electricity from the power grid and thus may power the hydraulic drive system and the devices for sending and receiving signals for adjusting the rotation angle of the blades.

Positioning devices are provided at intervals (*e.g*., 10 degrees to 20 degrees) on the arc sections of the circuit frame. While a trolley passes the positioning device, the positions of the trolley on the arc section can be determined. Based on the positions of the trolley on the arc sections, an optimal blade rotation angle is decided. It is known in the art how to determine the optimal rotation angles for the blades to maximize the efficiency of the device and adjust the rotation angle accordingly. For example, U.S. Patent No. 7,780,411 depicts the adjustment of the rotation angles based on the arc portion of the frame, which description is incorporated herein by reference.

Alternatively, the circuit frame may have two tiers - the upper tier and the lower tier.

In the present invention, the blade is attached on the trolley with one blade on each trolley, and the rotation angle of the blade is adjustable. The blade may have the section of a symmetric airfoil, airfoil with a convex surface and a concave surface, or airfoil with a convex surface and a flat surface. The interval between the neighboring trolleys is 2-8 times of the width of the blade.

In the present invention, the blade may consist of an upper blade and a lower blade, and the upper blade and the lower blade are connected via a pivot shaft. The pivot shaft is able to rotate, thus making the blade rotate.

In the present invention, the rotation angle of the blade is adjustable based on the position of the corresponding trolley on the circuit frame.

In the present invention, after the rotation angle of the blade is adjusted, the blade may be braked by the blade braking device, which comprises a brake caliper, a braking disc, and a hydraulic drive system. The hydraulic drive system comprises an oil tank, a hydraulic pump, an oil tube, and a motor. Two separate hydraulic drive systems may be used for changing the blade rotation angle and braking the blade, respectively; alternatively, to reduce the weight and cost, it is preferably to use the same hydraulic drive system for both adjusting the blade rotation angle and braking the blade. The braking disc may be deployed on the pivot shaft.

In the present invention, the wind power electricity generating system may further comprise wind vanes, and a wind vane is installed on top of each of the blades.

In the present invention, the devices for sending and receiving signals for adjusting the rotation angle of the blades may be sailboat autopilots that are installed inside each of the trolleys, and the sailboat autopilot receive signals from the wind vanes. Alternatively, the devices for sending and receiving signals for adjusting the rotation angle of the blades may be wireless servo signal transmission devices being deployed at each of the trolleys.

The present invention further provides a method for generating wind power by using the wind power system of the present invention. For the wind energy system of the present invention, the circuit frame may have a plurality of rotation centers, and the shape of the circuit frame can be designed to cater to the installation site condition. The section of the circuit frame modules can be designed as needed. Every part of the system, including the circuit frame, towers, rails, trolleys, blades, central control system, combiner box, and inverters, *etc*., can be manufactured in the factory and assembled at the installation site.

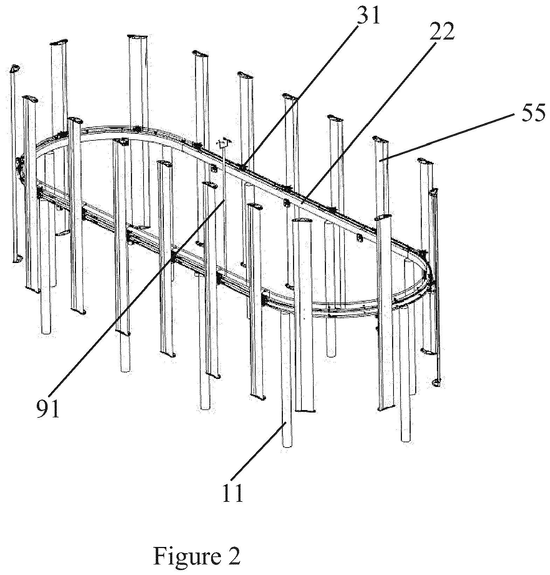

The sailboat autopilot placed inside each trolley is capable of automatically adjusting the blade rotation angle. The sailboat autopilot receives input from the wind vane and outputs signals to the hydraulic drive system, automatically adjusting the blade to the optimal rotation angle α based on the wind direction angle θ and the angle (β+α) between the blade movement direction and relative wind direction inputted by the wind vanes, in order to extract the wind energy to the maximum extent and making the blade move forward and then drive the generators to work. An anemometer and optionally a wind vane are deployed on the circuit frame, such as along the longitudinal axis of symmetry of the circuit frame as depicted in Figure 2, for identifying the wind speed and direction. A central controller actively adjusts the blade rotation angle and brakes the blade as necessary, based on the blade's position on the circuit frame, wind speed and direction, generator output, *etc.*

The outputs of the generators, ACs of varying frequency, voltage and current intensity, go to the combiner box, be rectified to become a single DC output, the combiner box sends the single DC to the inverter, and the inverter sends out power to a power grid.

The present invention provides a module design wind energy system that is ready for industrial mass production and particularly suitable for large scale electricity generation, and the shape of the system can be designed to adapt to the terrain of installation site.

### Brief Description of Drawings

Figure 1 shows the structure of the prior art VAWT.
Figure 2 shows the structure of the wind energy system of Example 1.
Figure 3 shows the connection structure of a blade and a trolley in the present invention.
Figure 4 shows another connection structure of a blade and a trolley in the present invention.
Figure 5 shows yet another connection structure of a blade and a trolley in the present invention.
Figure 6 is the perspective view of connection structure of a blade and a trolley in the present invention.
Figure 7 shows the view of the pantograph or slip ring on the trolley.
Figure 8 shows the view of the generator deployed on the circuit frame and engaged with chain.
Figure 9 shows the structure of the positioning devices on the circuit frame.
Figure 10 is a diagram depicting the wiring between the generators and the power grid.
Figure 11a shows the overall structure of the wind energy system in one embodiment of the present invention where the shape of the circuit frame is polygonal; Figure 11b shows the overall structure of the wind energy system in another embodiment of the present invention where the shape of the circuit frame is round.
Figure 12 shows the detailed structure of the rail and the slider in one embodiment of the present invention.
Figure 13 shows the detailed structure of the rail and the slider in another embodiment of the present invention.
Figure 14 shows the detailed structure of the rail in yet another embodiment of the present invention.
Figure 15 shows the relation among wind direction angle θ, blade rotation angle α, and angle of attack β.
Figure 16 shows the detailed structure of the wind vane on top of the blade.
Figure 17 shows the detailed structure of the sailboat autopilot inside the trolley.
Figure 18 illustrates the connection of the sailboat autopilot, wind vane, and the hydraulic drive system.

### DETAILED DESCRIPTION OF THE INVENTION

In the present invention, as shown in Figures 2, 3, 7, and 9, the structure of the wind energy system of the present invention comprises a circuit frame 22, towers 11 that support the circuit frame 22, a plurality of rails 32 that are attached to the circuit frame 22, a plurality of trolleys 31 that are connected with each other, each trolley 31 corresponds to and is connected with each blade 55 whose blade rotation angle is adjustable, a plurality of generators 61, a plurality of positioning devices 71 capable of sending and receiving signals are deployed on the circuit frame 22, and a device for sending and receiving signals for adjusting the rotation angle of the blades is deployed at each trolley 31, the current collector 81 deployed at the trolley 31 which is able to collect power supply, and an anemometer and wind vane 91.

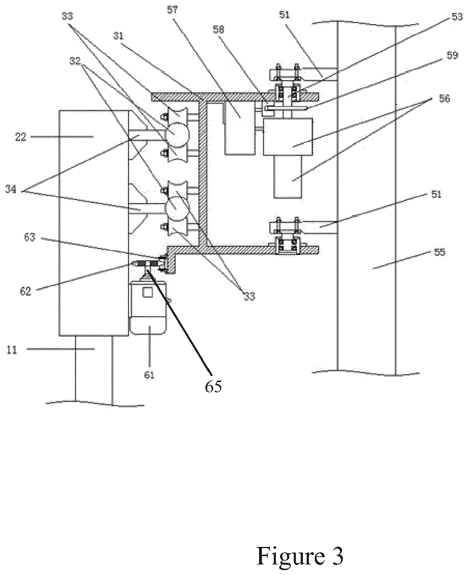

As shown in details in Figure 3, the trolley 31 is attached to the rails 32 of the circuit frame 22 and capable of moving on the rails 32 of the circuit frame 22 via rollers 33. The rail 32 is connected to the circuit frame 22 through the arms 34, and the rail 32 can be of any kind, *e.g*., maglev. The plurality of rollers 33 are on the trolley 31. The generator 61 is fixed on the circuit frame 22. The chain 63 may engage the gear 62 that is fixed on the rotor shaft 65 of the generators 61. A plurality of generators 61 are deployed on the circuit frame 22, and the gear 62, engaging with the chain 63 which connecting neighboring trolleys 31, is deployed on top of the generator rotor 65. When the wind drives the trolleys 31, the generators 61 are generating electricity.

As shown in Figures 3, 4, and 5, the blade 55 is attached on the trolley 31 with one blade on each trolley, and the rotation angle of the blade is adjustable. The blade may have the section of a symmetric airfoil, airfoil with a convex surface and a concave surface, or airfoil with a convex surface and a flat surface. The interval between the neighboring trolleys is 2-8 times of the width of the blade. The rotation angle of the blade 55 is adjustable based on the position of the corresponding trolley 31 on the circuit frame 22. After the rotation angle of the blade 55 is adjusted, the blade 55 may be braked by the blade braking device, which comprises a brake caliper 58, braking disc 59, and hydraulic drive system 57. The braking disc 59 may be deployed on the pivot shaft 53.

In one embodiment of the present invention as shown in Figure 3, the blade 55 is an integrated part 55 and connected to the pivot shafts 53 via the blade arms 51. The device for sending and receiving signals for adjusting the rotation angle of the blades controls the blade 55 to rotate to certain degrees as necessary.

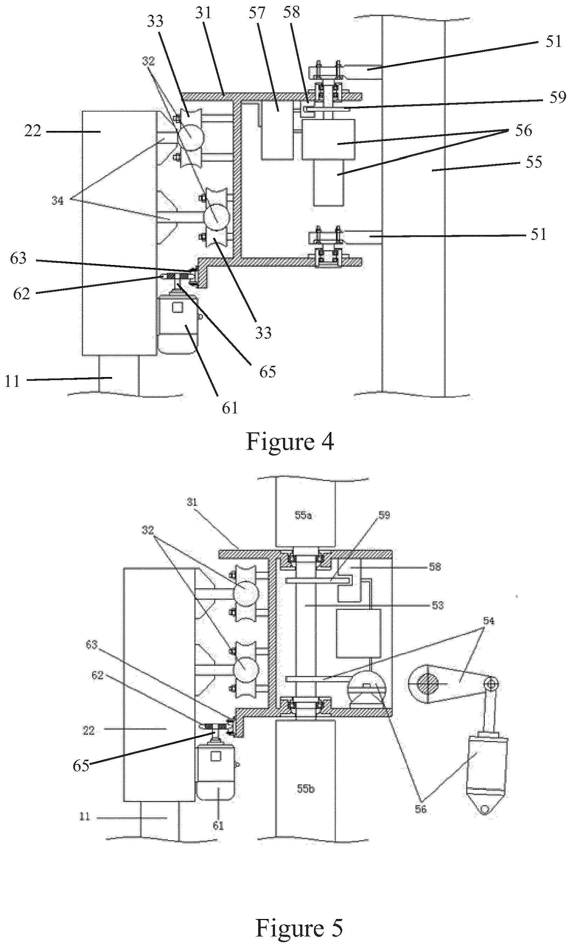

In another embodiment of the present invention as shown in Figure 4, the two rails 32, *i.e*., the upper rail and lower rail, are not vertically aligned, and the arrangement enhances the stability of the trolley 31.

In yet another embodiment of the present invention as shown in Figure 5, the blade 55 is consists of an upper blade 55a and a lower blade 55b, and both blades are connected with the pivot shaft 53. A servo pushing rod 54 is deployed at one end of the pivot shaft 53, controlling the rotation of both upper and lower blades 55a and 55b, and a braking disc 59, used to brake the upper and lower blades 55a and 55b, is deployed at the other end of the pivot shaft 53.

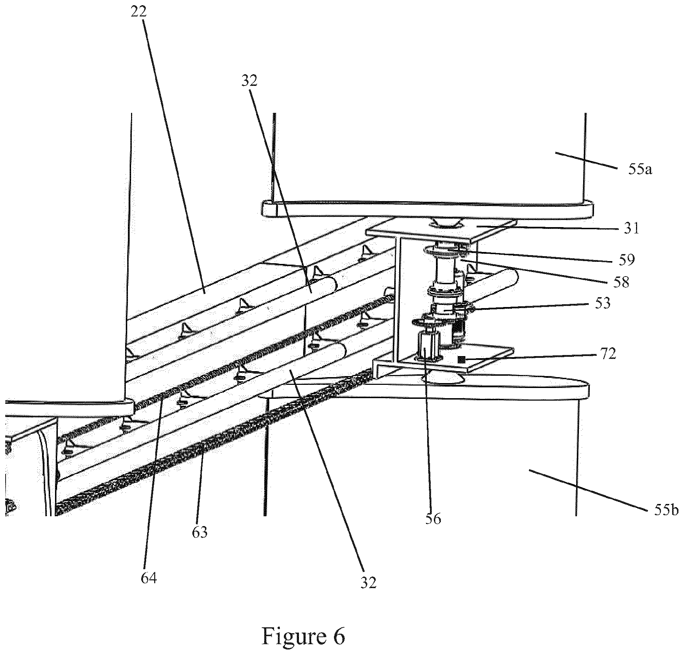

As shown in Figure 6, trolleys 31 are connected with each other by steel cable or chain 64. The blade may consist of an upper blade 55a and a lower blade 55b, and the upper blade 55a and the lower blade 55b are connected via a pivot shaft 53. The pivot shaft 53 is able to rotate, thus making the blade rotate. The wireless servo signal transmission device 72 receives signal from the central controller and controls the operation of the blade rotation servo device 56.

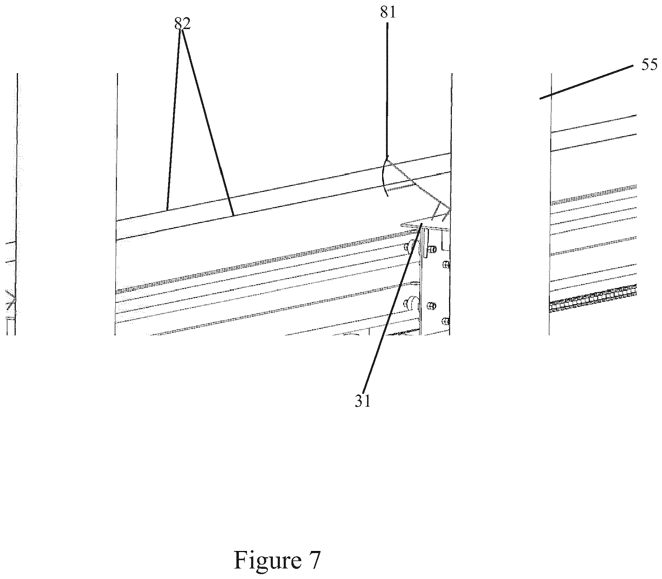

As shown in Figure 7, the current collector 81, which is a pantograph or a slip ring, is deployed on any of the trolley 31, thereby receiving electricity from the power grid 82. The pantograph or the slip ring 81 may get power from the power grid 82 to power the hydraulic drive system 57 and the device for sending and receiving signals for adjusting the rotation angle of the blades inside the trolley 31.

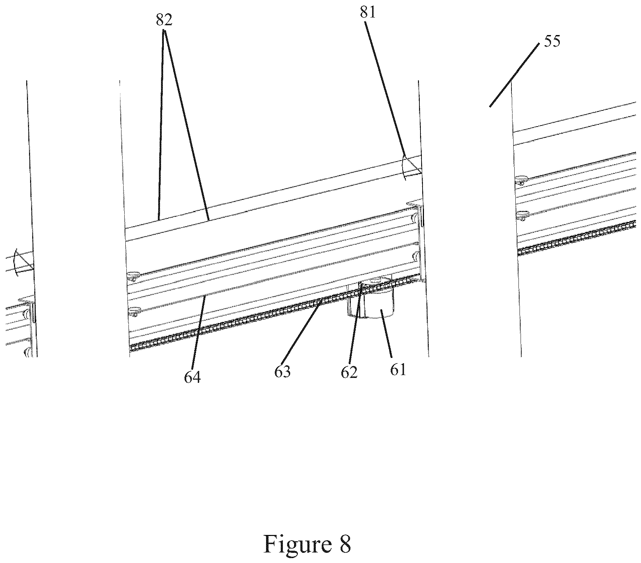

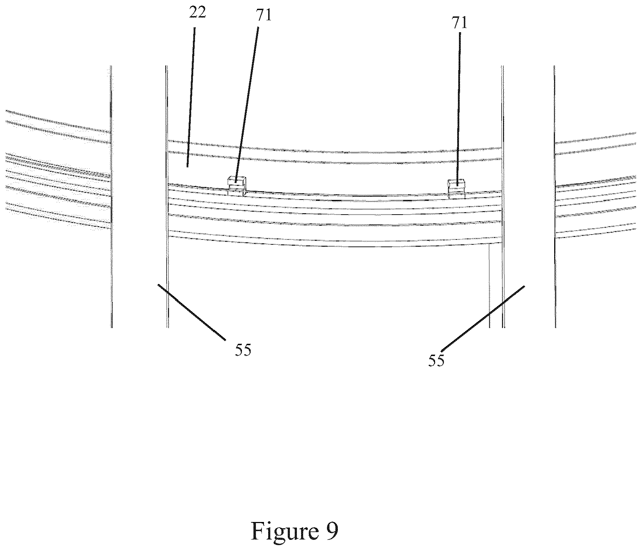

As shown in Figure 8, the steel cable 64 for connecting the trolleys is parallel to the chain 63. As shown in Figure 9, the positioning devices 71 are provided at intervals (e.g., 10 degrees to 20 degrees) on the arc sections of the circuit frame 22. While the trolley 31 passes the positioning devices 71, the positions of trolleys on the arc sections can be determined. Based on the positions of trolleys on the arc sections, an optimal blade rotation angle is decided.

Alternatively, the circuit frame may have two tiers - the upper tier and the lower tier.

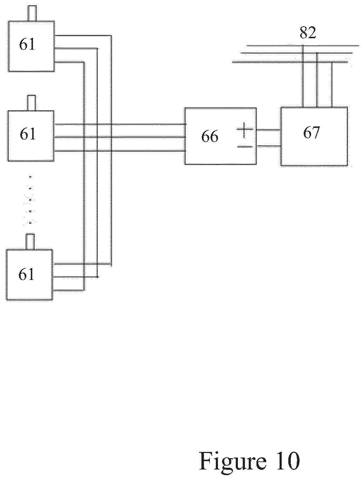

As shown in Figure 10, the outputs of the generators 61, ACs of varying frequency, voltage and current intensity, go to the combiner box 66, be rectified to become a single DC output, the combiner box 66 sends the single DC to the inverter 67, and the inverter 67 sends out power to the power grid 82.

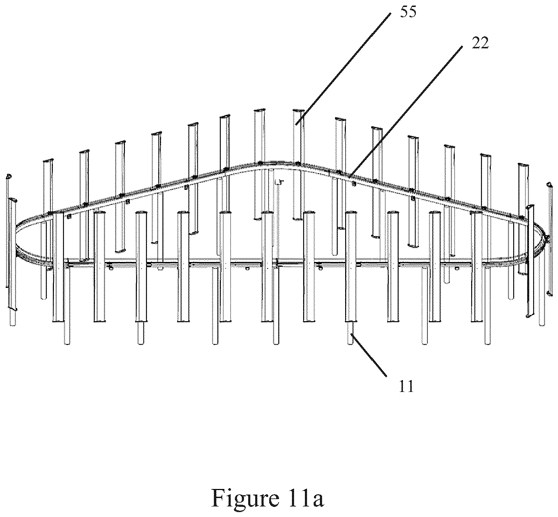

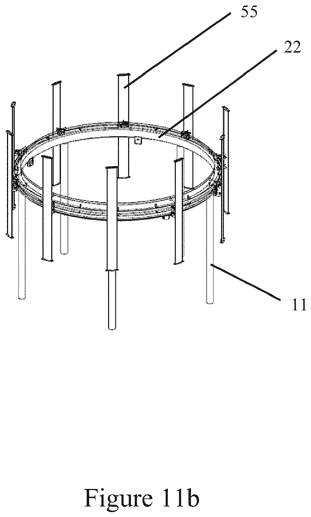

The circuit frame 22 may be of a unit module structure, and two unit modules may be connected via plugging. A plurality of modules may form the circuit frame with the designed shape. In one embodiment of the present invention as shown in Figure 11a, the overall shape of the circuit frame 22 is polygonal. In another embodiment of the present invention as shown in Figure 11b, the overall shape of the circuit frame 22 is round.

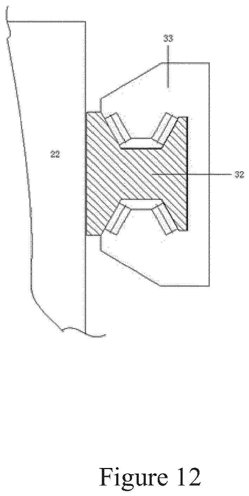

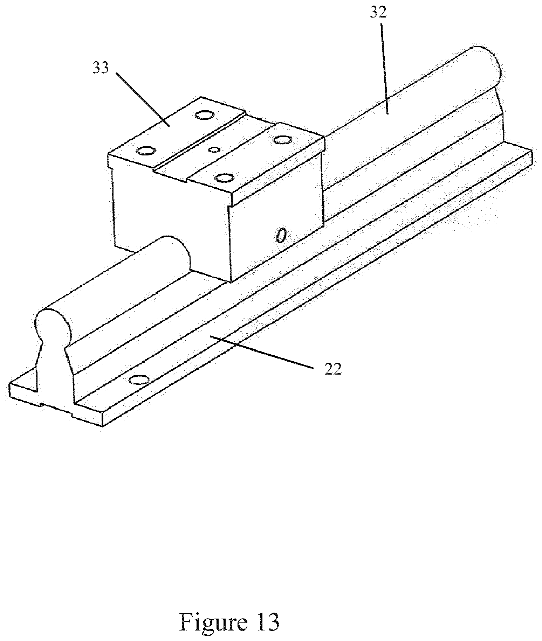

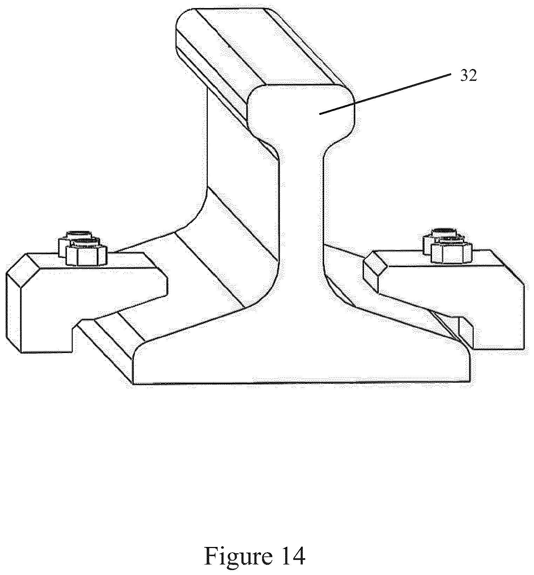

The trolley 31 is attached to the rails 32 of the circuit frame 22 and capable of moving on the rails 32 of the circuit frame 22 via rollers/sliders 33. In various embodiments of the present invention as shown in Figures 12, 13, and 14, rail 32 are in various arrangements in relation to roller/slider 33. Figure 14 shows another embodiment of the present invention that is like the rail of a train. The roller/slider is not shown in Figure 14, while the entire H shaped rail 32 is shown in the Figure.

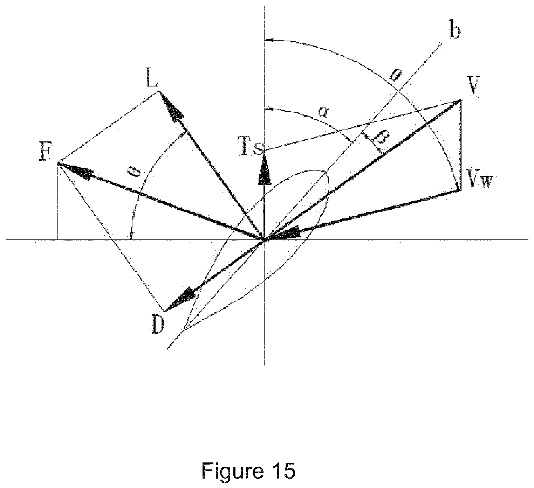

Figure 15 shows the relations among wind direction angle θ (the angle between blade movement direction and wind direction), blade rotation angle α, and angle of attack β.

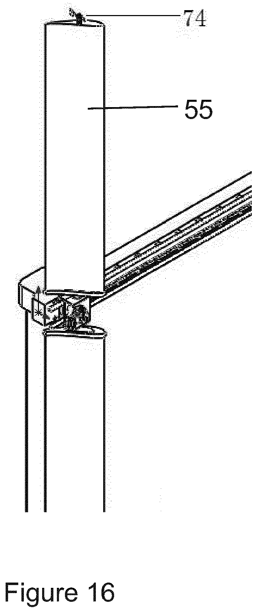

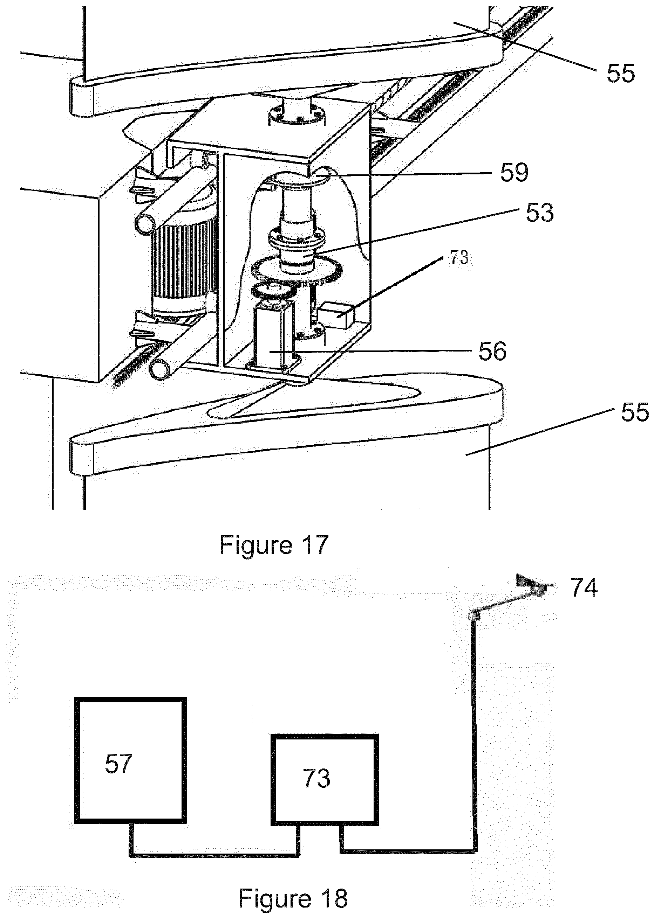

As shown in Figure 16, the wind vane 74 is placed on top of the blade, or between blade 55a and blade 55b. As shown in Figure 17, the Sailboat Autopilot 73, which is capable of automatically adjusting the blade rotation angle, is placed inside each trolley. Figure 18 illustrates that the Sailboat Autopilot 73 receives input from the wind vane 74 and outputs signal to the hydraulic drive system 57, automatically adjusting the blade to the optimal rotation angle α based on the wind direction angle θ and the angle (β+α) between the blade movement direction and relative wind direction inputted by the wind vane (for each airfoil profile, the optimal angle of attack β is known, therefore, the optimal blade rotation angle α can be obtained), in order to extract the wind energy to the maximum extent and making the blade move forward and then drive the generators to work.

The present invention is further illustrated in the following examples. The examples do not limit the scope of the present invention, as one of skilled in the art may modify the examples without departing from the scope of the present invention.

### Example 1

The wind power system of the present invention is as shown in Figures 2. In the circuit frame, each of the straight sections of the circuit frame is 2000 meters long, the radius of the arc section is 100 meters. The straight section faces the wind. The circuit frame is designed to be 20 meters high, and the blade is 23 meters long in total and 2 meters wide. There are 250 to 350 trolleys in total. The output of the system can reach 40 MW under wind speed of 13m/s, provided the wind speed is not parallel to the straight sections.

### Example 2

The overall structure of the wind energy system is as shown in Figure 11a, where the circuit frame is substantially of the shape of a triangle and its longest side is 2000 meters long. The longest side faces the wind. The circuit frame is designed to be 20 meters high, and the blade is 23 meters long in total and 2 meters wide. There are 250 to 350 trolleys in total. The output of the system can reach 40 MW under wind speed of 13m/s, provided the wind speed is not parallel to the longest side. The system in Example 2 is the same in structural elements as the system in Example 1, while the length and shape design of the circuit frame differs from that of Example 1.

### Example 3

The overall structure of the wind energy system is shown in Figure 11b. The circuit frame is round with a diameter of 2000 meters. The circuit frame is designed to be 20 meters high, and the blade is 23 meters long in total and 2 meters wide. There are 400 to 450 trolleys in total. The output of the system can reach 35 MW under wind speed of 13m/s. The system in Example 3 is the same in structural elements as the system in Example 1, while the length and shape design of the circuit frame differs from that of Example 1.

### Example 4

The overall structure of the wind energy system is the same to the one shown in Figure 11b and Example 3, except that the circuit frame is round with a diameter of 500 meters; the circuit frame is designed to be 20 meters high; the blade is 23 meters long in total and 2 meters wide; and there are 100 to 120 trolleys in total. The output of the system can reach 8 MW under wind speed of 13m/s. The system in Example 4 is the same in structural elements as the system in Example 1, while the length and shape design of the circuit frame differs from that of Example 1.

**Reference Numeral List**

| | | | | | |
|---|---|---|---|---|---|
| 1. | blade (prior art); | 2. | vertical main shaft (prior art); | 3. | radial arm (prior art); |
| 4. | tower(prior art); | 11. | tower; | 22. | circuit frame; |
| 31. | trolley; | 32. | rail; | 33. | roller/sliders; |
| 34. | arm; | 51. | blade arm; | 53. | pivot shaft; |
| 54. | servo pushing rod; | 55. | blade; | 55a. | upper blade; |
| 55b. | lower blade; | 56. | blade rotation servo device ; | | |
| 57. | hydraulic drive system; | | | 58. | brake caliper; |
| 59. | braking disc; | 61. | generator; | 62. | gear; |
| 63. | chain; | 64. | steel cable or chain; | | |
| 65. | rotating shaft of generator; | | | 66. | combiner box; |
| 67. | inverter; | 71. | positioning device (transmitters or receivers); | | |
| 72. | wireless servo signal transmission device; | | | 73. | sailboat autopilot; |
| 74. | wind vane; | 81. | current collector; | 82. | power grid; |
| 91. | wind vane (and optionally anemometer). | | | | |

## Claims

1. A wind power electricity generating system, comprising
a circuit frame (22),
towers (11) for supporting the circuit frame (22),
rails (32) attached to the circuit frame (22),
blades (55),
trolleys (31) being interconnected with each other and each of the trolleys (31) corresponding to and being connected with each of the blades (55),
generators (61) fixed on the circuit frame (22),
a gear (62) fixed on the generator rotor shaft (65);
a chain connecting the trolleys (31) and engaging the gear (62) on the generator (61) for driving the generator (61);
and
devices (72) for sending and receiving signals for adjusting a rotation angle of the blades (55), said devices (72) being deployed on each of the trolleys (31),
wherein the rotation angle of the blades (55) is adjustable,
**characterized in that**
the wind power electricity generating system further comprises
an anemometer and a wind vane (74);
positioning devices (71) capable of sending and receiving signals, said positioning devices (71) being deployed on the circuit frame (22) and each trolley (31) respectively,
a current collector (81) installed on any of the trolleys (31) for collecting power supply, wherein the positioning devices (71) are provided at intervals on the arc of the circuit frame (22) defining certain arc sections of the circuit frame (22), and are capable of determining the position of a trolley (31) and allocate its position to a given arc section of the circuit frame (22), such that an optimal rotation angle of the blade (55) of a given trolley (31) based on the position of the trolley (31) on the arc section can be determined.

2. The wind power electricity generating system of claim 1, wherein the circuit frame (22) is of a unit module structure having two or more modules, and the modules are connected by plugging to form the circuit frame (22) of a designed shape.

3. The wind power electricity generating system of claim 1, wherein the blade (55) has a symmetric airfoil section, an airfoil section with a convex surface and a concave surface, or an airfoil section with a convex surface and a flat surface.

4. The wind power electricity generating system of claim 1, wherein the circuit frame (22) comprises are sections and straight sections, and the positioning device (71) is deployed on the arc sections of the circuit frame (22).

5. The wind power electricity generating system of claim 1, further comprising Arms (34) for connecting the rails (32) to the circuit frame (22),
rollers or sliders (33) on the trolley (31),
wherein the trolley (31) is moveable via the rollers or sliders (33) on the rails (32).

6. The wind power electricity generating system of claim 1, wherein an interval between neighboring trolleys (31) is 2 to 8 times of a width of the blade (55).

7. The wind power electricity generating system of claim 1, further comprising a blade braking device to brake the blade (55), said blade braking device comprising
a brake caliper (58),
a braking disc (59), and
a hydraulic drive system (57).

8. The wind power electricity generating system of claim 1, the blade (55) consists of an upper blade (55a) and a lower blade (55b), further comprising
a pivot shaft (53), and
a blade braking device for braking the upper blade (55a) and the lower blade (55b), said blade braking device comprising
a brake caliper (58),
a braking disc (59), and
a hydraulic drive system (57),
wherein the upper blade (55a) and the lower blade (55b) are connected by the pivot shaft (53); and the pivot shaft (53) is rotatable to make the upper blade (55a) and the lower blade (55b) rotate; and the braking disc (59) is deployed on the pivot shaft (53) for braking the upper blade (55a) and the lower blade (55b).

9. The wind power electricity generating system of claim 1, wherein the devices (72) for sending and receiving signals for adjusting the rotation angle of the blades (55) are wireless servo signal transmission devices being deployed at each of the trolleys (31).

10. The wind power electricity generating system of claim 1, wherein the current collector (81) is a pantograph or a slip ring.

11. The wind power electricity generating system of claim 1, further comprising
a central controller,
wherein the central controller actively adjusts the rotation angle of the blade (55) or brakes the blade (55) based on the blade's (55) position on the circuit frame (22), wind speed and direction, and generator (61) output.

12. The wind power electricity generating system of claim 1, further comprising
a combiner box (66), and
an inverter (67),
wherein outputs of the generators (61), ACs of varying frequency, voltage and current intensity, go to the combiner box (66), be rectified to become a single DC, the combiner box (66) sends the single DC to the inverter (67), and the inverter (67) sends out power to a power grid (82).

13. The wind power electricity generating system of claim 1, further comprising wind vanes (74),
wherein the wind vanes (74) are on top of each of the blades (55), and the devices (72) for sending and receiving signals for adjusting the rotation angle of the blades (55) are sailboat autopilot (73) installed inside each of the trolleys (31), and the sailboat autopilot (73) receive signals from the wind vanes (74).

14. The wind power electricity generating system of claim 1, wherein the circuit frame (22) has a circular, an oval, a triangular or any other polygonal shape.

15. A method for generating wind power using the electricity generating device of any of claims 1 to 14.

## Patentansprüche

1. Windkraftelektrizitätserzeugungssystem umfassend
einen Umlaufrahmen (22),
Türme (11) zur Lagerung des Umlaufrahmens (22),
Schienen (32), die mit dem Umlaufrahmen (22) verbunden sind,
Flügel (55),
Rollwagen (31), die miteinander verbunden sind, wobei jeder der Rollwagen (31) einem der Flügel (55) zugeordnet und mit diesem verbunden ist,
Generatoren (61), die an dem Umlaufrahmen (22) befestigt sind,
ein Zahnrad (62), das an dem Generatorrotorschaft (65) befestigt ist,
eine Kette, die die Rollwagen (31) miteinander verbindet und mit dem Zahnrad (62) an dem Generator (62) im Eingriff ist, um den Generator (61) anzutreiben,
und
Vorrichtungen (72) zum Senden und Empfangen von Signalen zum Einstellen eines Rotationswinkels der Flügel (55), wobei die Vorrichtungen (72) an jedem der Rollwagen (31) ausgebildet sind,
**dadurch gekennzeichnet, dass**
das Windkraftelektrizitätserzeugungssystem ferner umfasst einen Windmesser und eine Windfahne (74), Positionierungsvorrichtungen (71), die geeignet sind, Signale zu senden und zu empfangen, wobei die Positionierungsvorrichtungen (71) jeweils an dem Umlaufrahmen und jedem der Rollwagen eingesetzt sind,
einen Stromabnehmer (81), der an einem der Rollwagen zur Abnahme des Stroms ausgebildet ist, wobei die Positionierungsvorrichtungen (71) in Intervallen auf dem Bogen des Umlaufrahmens (22) vorgesehen sind und damit bestimmte Bogenbereiche des Umlaufrahmens (22) definieren und geeignet sind, die Position eins Rollwagens zu bestimmen und dessen Position einem bestimmten Bogenbereich des Umlaufrahmens (22) zuzuordnen, sodass ein optimaler Rotationswinkel des Flügels (55) eines jeweiligen Rollwagens (31) basierend auf der Position des jeweiligen Rollwagens (31) auf dem Bogenbereich bestimmt werden kann.

2. Windkraftelektrizitätserzeugungssystem nach Anspruch 1, bei welchem der Umlaufrahmen (22) als eine Einheitsmodulstruktur ausgebildet ist und zwei oder mehrere Module aufweist, und wobei die Module durch Zusammenstecken miteinander verbunden sind, um den Umlaufrahmen (22) in einer ausgestalteten Form zu bilden.

3. Windkraftelektrizitätserzeugungssystem nach Anspruch 1, bei welchem der Flügel (55) einen symmetrischen Profilbereich, einen Profilbereich mit einer konvexen Oberfläche und einer konkaven Oberfläche oder einen Profilbereich mit einer konvexen Oberfläche und einer flachen Oberfläche aufweist.

4. Windkraftelektrizitätserzeugungssystem nach Anspruch 1, bei welchem der Umlaufrahmen (22) Bogenbereiche und gerade Bereiche aufweist, und wobei die Positionierungsvorrichtung (71) an den Bogenbereichen des Umlaufrahmens (22) eingesetzt ist.

5. Windkraftelektrizitätserzeugungssystem nach Anspruch 1, weiter umfassend Arme (34) zur Verbindung der Schienen (32) mit dem Umlaufrahmen (22), Rollen oder Gleitelemente (33) an dem Rollwagen (31),
wobei der Rollwagen (31) über die Rollen oder Gleitelemente (33) auf den Schienen (32) bewegbar ist.

6. Windkraftelektrizitätserzeugungssystem nach Anspruch 1, bei welchem ein Intervall zwischen benachbarten Rollwagen (31) das 2 - bis 8 - fache der Breite des Flügels (55) beträgt.

7. Windkraftelektrizitätserzeugungssystem nach Anspruch 1, weiter umfassend
eine Flügelbremsvorrichtung zum Bremsen des Flügels (55), wobei die Flügelbremsvorrichtung umfasst
einen Bremssattel (58),
eine Bremsscheibe (59), und
ein hydraulisches Antriebssystem (57).

8. Windkraftelektrizitätserzeugungssystem nach Anspruch 1, bei welchem der Flügel (55) einen oberen Flügel (55a) und einen unteren Flügel (55b) aufweist und weiter umfasst
eine Drehachse (53), und
eine Flügelbremsvorrichtung zum Bremsen des oberen Flügels (55a) und des unteren Flügels (55b), wobei die Flogelbremsvorrichtung
einen Bremssattel (58),
eine Bremsscheibe (59), und
ein hydraulisches Antriebssystem (57) umfasst,
wobei der obere Flügel (55a) und der untere Flügel (55b) über die Drehachse (53) miteinander verbunden sind, und die Drehachse (53) rotierbar ist, um den oberen Flügel (55a) und den unteren Flügel (55b) zu rotieren, und wobei die Bremsscheibe (59) an der Drehachse (53) eingesetzt ist, um den oberen Flügel (55a) und den unteren Flügel (55b) abzubremsen.

9. Windkraftelektrizitätserzeugungssystem nach Anspruch 1, bei welchem die Vorrichtungen (72) zum Senden und Empfangen von Signalen zum Einstellen des Rotationswinkels der Flügel (55) drahtlose Servosignalübertragungsvorrichtungen sind, die an jedem der Rollwagen (31) eingesetzt sind.

10. Windkraftelektrizitätserzeugungssystem nach Anspruch 1, bei welchem der Stromabnehmer (81) ein Pantograph oder ein Gleitring ist.

11. Windkraftelektrizitätserzeugungssystem nach Anspruch 1, weiter umfassend
einen Zentralkontroller,
wobei der Zentralkontroller basierend auf der Position des Flügels (55) auf dem Umlaufrahmen (22), der Windgeschwindigkeit und Windrichtung und dem Output des Generators (61) den Rotationswinkel des Flügels (55) einstellt oder den Flügel (55) aktiv abbremst.

12. Windkraftelektrizitätserzeugungssystem nach Anspruch 1, weiter umfassend
eine Kombinatorbox (66) und
einen Inverter (67),
wobei Ausgaben des Generators (61), Wechselströme verschiedener Frequenzen, Spannungs- und Stromintensitäten an die Kombinatorbox (66) übertragen werden, gleichgerichtet werden, um einen einzelnen Gleichstrom zu erzeugen, und wobei die Kombinatorbox (66) den einzelnen Gleichstrom an den Inverter (67) sendet und der Inverter (67) Ausgabestrom in ein Stromnetz (82) einspeist.

13. Windkraftelektrizitätserzeugungssystem nach Anspruch 1, weiter umfassend Windfahnen (74),
wobei die Windfahnen (74) am oberen Ende eines jeden der Flügel (55) ausgebildet sind, und wobei die Vorrichtungen (72) zum Senden und Empfangen von Signalen zum Einstellen des Rotationswinkels der Flügel (55) Segelbootautopiloten (73) sind und im Inneren eines jeden der Rollwägen (31) ausgebildet sind, und wobei die Segelbootautopiloten (73) Signale von den Windfahnen (74) empfangen.

14. Windkraftelektrizitätserzeugungssystem nach Anspruch 1, bei weichem der Umlaufrahmen (22) eine Kreisform, eine ovale Form, eine Dreiecksform oder jede andere polygonale Form aufweist.

15. Verfahren zum Erzeugen von Windkraft unter Verwendung des Windkraftelektrizitätserzeugungssystems nach einem der Ansprüche 1 bis 14.

## Revendications

1. Système de génération d'électricité à énergie éolienne, comprenant:
un cadre à circuit (22),
des tours (11) pour supporter le cadre à circuit (22),
des rails (32) fixés au cadre à circuit (22),
des lames (55),
des chariots (31) raccordés mutuellement les uns aux autres et chacun des chariots (31) correspondant à, et étant raccordé à, chacune des lames (55),
des générateurs (61) fixés sur le cadre à circuit (22),
une roue dentée (62) fixée sur l'arbre de rotor de générateur (65),
une chaîne raccordant les chariots (31) et entrant en prise avec la roue dentée (62) sur le générateur (61) pour entraîner le générateur (61), et
des dispositifs (72) pour envoyer et recevoir des signaux pour ajuster un angle de rotation des lames (55), lesdits dispositifs (12) étant déployés sur chacun des chariots (31),
dans lequel l'angle de rotation des lames (55) est ajustable,
**caractérisé en ce que**
le système de génération d'électricité à énergie éolienne comprend en outre un anémomètre et une girouette (74),
des dispositifs de positionnement (71) capables d'envoyer et de recevoir des signaux, lesdits dispositifs de positionnement (71) étant déployés sur le cadre à circuit (22) et chaque chariot (31) respectivement,
un collecteur de courant (81) installé sur l'un quelconque des chariots (31) pour collecter une alimentation électrique,
dans lequel les dispositifs de positionnement (71) sont prévus à des intervalles sur l'arc du cadre à circuit (22) définissant certaines sections d'arc du cadre à circuit (22), et sont capables de déterminer la position d'un chariot (31) et
d'attribuer sa position à une section d'arc donnée du cadre à circuit (22), de telle sorte qu'un angle de rotation optimal de la lame (55) d'un chariot donné (31), en fonction de la position du chariot (31) sur la section d'arc, puisse être déterminé.

2. Système de génération d'électricité à énergie éolienne selon la revendication 1,
dans lequel le cadre à circuit (22) est d'une structure à modules unitaires possédant deux, ou plus, modules, et les modules sont raccordés par enfichage pour former le cadre à circuit (22) de forme conçue.

3. Système de génération d'électricité à énergie éolienne selon la revendication 1,
dans lequel la lame (55) possède une section de profil symétrique, une section de profil avec une surface convexe et une surface concave ou une section de profil avec une surface convexe et une surface plate.

4. Système de génération d'électricité à énergie éolienne selon la revendication 1,
dans lequel le cadre à circuit (22) comprend des sections d'arc et des sections droites, et le dispositif de positionnement (71) est déployé sur les sections d'arc du cadre à circuit (22).

5. Système de génération d'électricité à énergie éolienne selon la revendication 1, comprenant en outre
des bras (34) pour raccorder les rails (32) au cadre à circuit (22),
des rouleaux ou coulisseaux (33) sur le chariot (31),
dans lequel le chariot (31) est mobile par l'intermédiaire des rouleaux ou coulisseaux (33) sur les rails (32).

6. Système de génération d'électricité à énergie éolienne selon la revendication 1,
dans lequel un intervalle entre des chariots voisins (31) est 2 à 8 fois une largeur de la lame (55).

7. Système de génération d'électricité à énergie éolienne selon la revendication 1, comprenant en outre
un dispositif de freinage de lame pour freiner la lame (55), ledit dispositif de freinage de lame comprenant
un étrier de frein (58),
un disque de frein (59), et
un système d'entraînement hydraulique (57).

8. Système de génération d'électricité à énergie éolienne selon la revendication 1, la lame (55) étant constituée d'une lame supérieure (55a) et d'une lame inférieure (55b), comprenant en outre
un arbre pivot (53), et
un dispositif de freinage de lame pour freiner la lame supérieure (55a) et la lame inférieure (55b), ledit dispositif de freinage de lame comprenant un étrier de frein (58),
un disque de frein (59), et
un système d'entraînement hydraulique (57),
dans lequel la lame supérieure (55a) et la lame inférieure (55b) sont raccordées par l'arbre pivot (53), et l'arbre pivot (53) est rotatif pour faire en sorte que la lame supérieure (55a) et la lame inférieure (55b) entrent en rotation, et le disque de frein (59) est déployé sur l'arbre pivot (53) pour freiner la lame supérieure (55a) et la lame inférieure (55b).

9. Système de génération d'électricité à énergie éolienne selon la revendication 1,
dans lequel les dispositifs (72) pour envoyer et recevoir des signaux pour ajuster l'angle de rotation des lames (55) sont des servo-dispositifs de transmission de signal sans fil étant déployés sur chacun des chariots (31).

10. Système de génération d'électricité à énergie éolienne selon la revendication 1, dans lequel le collecteur de courant (81) est un pantographe ou une bague collectrice.

11. Système de génération d'électricité à énergie éolienne selon la revendication 1, comprenant en outre
un dispositif de commande central,
dans lequel le dispositif de commande central ajuste activement l'angle de rotation de la lame (55) ou freine la lame (55) en fonction de la position de la lame (55) sur le cadre à circuit (22), de la vitesse et de la direction du vent, et du rendement du générateur (61).

12. Système de génération d'électricité à énergie éolienne selon la revendication 1, comprenant en outre
une boîte à combinateur (66), et
un onduleur (67),
dans lequel des sorties des générateurs (61), des CA de fréquence, de tension et d'intensité de courant variées, vont vers la boîte à combinateur (66), sont redressées pour devenir un CC singulier, la boîte à combinateur (66) envoie le CC singulier à l'onduleur (67), et l'onduleur (67) envoie l'énergie électrique à un réseau électrique (82).

13. Système de génération d'électricité à énergie éolienne selon la revendication 1, comprenant en outre des girouettes (74),
dans lequel les girouettes (74) sont par-dessus chacune des lames (55), et les dispositifs (72) pour envoyer et recevoir des signaux pour ajuster l'angle de rotation des lames (55) sont des pilotes automatiques de voilier (73) installés à l'intérieur de chacun des chariots (31), et les pilotes automatiques de voilier (73) reçoivent des signaux à partir des girouettes (74).

14. Système de génération d'électricité à énergie éolienne selon la revendication 1,
dans lequel le cadre à circuit (22) présente une forme circulaire, ovale, triangulaire ou toute autre forme polygonale,

15. Procédé pour générer de l'énergie éolienne en utilisant le dispositif de génération d'électricité de l'une quelconque des revendications 1 à 14.
